# EUROPEAN PATENT SPECIFICATION

(11) **EP 1 560 369 B1**
(45) Date of publication and mention of the grant of the patent: **23.11.2016**
(21) Application number: 05001790.4
(22) Date of filing: 28.01.2005
(51) Int. Cl.: H04W 48/18, H04W 8/18, H04W 12/06, H04W 88/06

(54) **COMMUNICATION SYSTEM, COMMUNICATION TERMINAL, AND COMMUNICATION PROGRAM FOR NETWORK SELECTION**
KOMMUNIKATIONSSYSTEM, KOMMUNIKATIONSENDGERÄT UND KOMMUNIKATIONSPROGRAMM ZUR NETZWERKAUSWAHL
SYSTÈME, TERMINAL ET LOGICIEL DE COMMUNICATION POUR LA SÉLECTION DU RÉSEAU

(30) Priority: 29.01.2004 JP 2004021997; 15.12.2004 JP 2004363304
(43) Date of publication of application: 03.08.2005
(73) Proprietor: NTT DoCoMo, Inc., Tokyo 100-6150 (JP)
(72) Inventor: Sato, Hidekazu, c/o DoCoMo Inc., 2-chome, Chiyoda-ku, Tokyo 100-6150 (JP)
(74) Representative: Viering, Jentschura & Partner mbB Patent- und Rechtsanwälte

(56) References cited:
- WO-A-01/41392
- WO-A-02/089337
- WO-A-03/094440
- WO-A-2004/008693
- GB-A- 2 294 844
- GB-A- 2 389 005

## Description

### BACKGROUND OF THE INVENTION

### Field of the Invention

The present invention relates to communication systems, communication terminals, and communications programs.

### Related Background of the Invention

In recent years, with the rapid spread of wireless LANs, there exist various methods of connection settings to connect wireless communication terminals to such wireless LANs. There are, for example, a method combining SS-ID (Service Set Identifier) and WEP (Wired Equivalent Privacy), a method combining SS-ID, WEP and PPPoE (PPP over Ethernet), a method combining SS-ID and IEEE802. 1x, a method combining SS-ID and WPA (Wi-Fi Protected Access), as methods of connection settings. In addition, if the access points are different, the contents of the connection setting are usually different for wireless LANs having an identical connection setting method. Thus, it is necessary to provide a connection setting associated with access points of respective wireless LANs in order that a wireless communication terminal can establish communication with an access point of a wireless LAN. However, due to the difficulty in understanding the above-mentioned connection setting method, it is troublesome for ordinary users to perform connection settings.

Patent literature 1 (Japanese Patent Application Publication No.2002-252620) discloses a technique for a wireless communication terminal to establish communication with a plurality of access points of wireless LANs. The technique preliminarily defines priority for a plurality of access points, associates these access points with the connection setting and stores the relationship into the wireless communication terminal. In this manner, the wireless communication terminal can set the connection setting associated with the access points in descending order of priority and transmit a connection request. Thus, a user can detect a communicate-able access point in descending order of priority without having to perform connection setting associated with respective access points.

Patent literature 2 (GB2389005) discloses a network selection system in which the location of the communication terminal is regularly reported and signalled to the network for comparisons with information on stand WLAN average areas.

### SUMMARY OF THE INVENTION

The technique disclosed in the patent literature 1 attempts to connect, in descending order of priority, to access points which have been preliminarily registered. Thus, when connecting to access points other than those preliminarily registered, the user has to perform a complicated connection setting by himself. In addition, undesirable waiting time occurs when connecting to an access point with a low priority, because connection is attempted in descending order of priority.

Therefore, in order to solve the above-mentioned problem, it is an object of the present invention to provide a communication system, a communication terminal and a communication program which can connect a communication terminal to a wireless communication network without the user having to perform a complicated seating by himself.

It is also an aim to implement a more efficient system than in patent literature 2, which would require less complexity in the communication terminal.

The scope of the present invention is defined by appended independent claims 1,3 and 5.

The communication system of the present invention is a communication system comprising a communication terminal, a wireless communication network to which the communication terminal can be connected, and a predefined network which is different from the wireless communication network, wherein the communication terminal comprises a connection setting information acquiring means for acquiring, from the predefined network, connection setting information to connect to a wireless communication network, a connection setting registering means for registering the connection setting information acquired by the connection setting information acquiring means, and a connection executing means for connecting to a wireless communication network associated with the connection setting information registered by the connection setting registering means.

In addition, the communication program of the present invention directs the communication terminal to function as a connection setting information acquiring means fo r acquiring, from the predefined network, connection setting information to connect to a wireless communication network, a connection setting registering means for registering the connection setting information acquired by the connection setting information acquiring means, and a connection executing means for connecting to a wireless communication network associated with the connection setting information registered by the connection setting registering means.

According to the above invention, the connection setting information of a wireless communication network is registered by the connection setting registering means, based on the connection setting information acquired from the predefined network. In addition, a connection process is executed, by the connection executing means, to connect to the wireless communication network associated with the registered connection setting information. Thus, the user can readily connect his own communication terminal to a wireless communication network without having to perform connection setting to the wireless communication network by himself.

In the communication system of the present invention, it is preferred that the predefined network comprises a management server for managing user information with regard to users who carry communication terminals, and the management server comprises a user specific information receiving means for receiving, from the communication terminals, user specific information for identifying users carrying the communication terminals; a connection setting information extracting means for extracting, based on the user specific information received from the user specific information receiving means, the connection setting information preliminarily stored according to the user specific information; and a connection setting information transmitting means for transmitting the connection setting information extracted by the connection setting information extracting means to the communication terminal.

In the above-mentioned manner, the management server can receive user specific information from communication terminals and transmit the connection setting information associated with the received user specific information back to the communication terminal. Thus, different connection setting information for individual users can be transmitted respectively to communication terminals carried by respective users. In other words, a communication terminal carried by a user can be readily connected to a connectable wireless communication network, without the user having to perform connection setting of the wireless communication network by himself.

The communication system of the present invention further comprises an authentication means for authenticating a user based on the user specific information received by the user specific information receiving means, wherein the connection setting information extracting means can extract the connection setting information if the authentication means determines that the user is valid. In this manner, connection can be readily made even if the wireless communication network to be connected is built in a network which requires advanced security, for example, without the user having to perform connection setting of the wireless communication network by himself.

In the communication system of the present invention, it is preferred that the connection setting information acquiring means acquires connection setting information from a web server or a mail server included in the predefined network. In this manner the connection setting information managed by the system can be acquired from a web server or a mail server via the Internet, for example, thereby improving ease of use.

The communication system of the present invention is a communication system comprising a communication terminal and a management unit for managing connection setting information for connecting to a wireless communication network, wherein the communication terminal comprises a connection setting information acquiring means for transmitting, to the management unit, an "un-connectable" message indicating that the wireless communication network associated with the connection setting information registered in the user's terminal cannot be connected, and for acquiring, from the management unit, connection setting information of a wireless communication network which is currently available by the user's terminal; a connection setting registering means for registering the connection setting information acquired by the connection setting information acquiring means; and a connection executing means for connecting to a wireless communication network associated with the connection setting information registered by the connection setting registering means, and the management unit comprises a location information acquiring means for acquiring, if an "un-connectable" message is received from the communication terminal, location information of the communication terminal from the communication network which manages location information of the communication terminal, based on the telephone number called by the communication terminal which sent the "un-connectable" message; a connection setting information extracting means for extracting connection setting information of the wireless communication networks currently available by the communication terminal from the preliminarily stored connection setting information of wireless communication networks, based on the transmitted telephone number and the acquired location information; and a connection setting information transmitting means for transmitting the extracted connection setting information to the communication terminal.

According to the present invention, even if the communication terminal cannot be connected to wireless communication networks, connection setting information of currently available wireless communication networks is acquired from the management unit which is the destination of the "un-connectable" message, by the connection setting information acquiring means of the communication terminal. In addition, a process is executed by the connection executing means of the communication terminal for connecting to the wireless communication network associated with the connection setting information acquired. Thus, the communication terminal, carried by a user can be readily connected to a currently available wireless communication network, without the user having to perform connection setting of the wireless communication network by himself. In addition, location information of the communication terminal is acquired from the predefined communication network by the location information acquiring means of the management unit, based on the telephone number called from the communication terminal which transmitted the "un-connectable" message. In addition, connection setting information of the wireless communication network currently available by the communication terminal is extracted, based on the telephone number and the location information of the communication terminal, by the connection setting information extracting means of the management unit. Furthermore, the extracted connection setting information is transmitted to the communication terminal which sent the "un-connectable" message, by the connection setting information transmitting means of the management unit. Thus, the communication terminal is enabled to receive connection setting information of wireless communication networks currently available by the user's terminal.

In the above-mentioned communication system of the present invention, it is preferred that the connection setting information includes at least an access point identification code for identifying an access point of the wireless communication network, and the connection executing means connects to the wireless communication network based on the access point identification code. In this manner, a communication terminal carried by a user can be readily connected to an access point of a wireless communication network, without the user having to perform connection setting with regard to access points of the wireless communication network by himself.

The communication terminal of the present invention is a communication terminal connectable to a management unit which manages connection setting information for connecting to a wireless communication network, wherein the communication terminal wherein the communication terminal comprises a connection setting information acquiring means for transmitting, to the management unit, an "un-connectable" message indicating that the wireless communication network associated with the connection setting information registered in the user's terminal cannot be connected, and for acquiring, from the management unit, connection setting information of a wireless communication network which is currently available by the user's terminal; a connection setting registering means for registering the connection setting information acquired by the connection setting information acquiring means; and a connection executing means for connecting to a wireless communication network associated with the connection setting information registered by the connection setting registering means.

In addition, the communication program of the present invention directs the communication terminal to function as a connection setting information acquiring means for transmitting, to the management unit which manages the connection setting information, an "un-connectable" message indicating that the wireless communication network associated with the connection setting information for connecting to a wireless communication network registered in the user's terminal cannot be connected, and for acquiring, from the management unit, connection setting information of a wireless communication network which is currently available by the user's terminal; a connection setting registering means for registering the connection setting information acquired by the connection setting information acquiring means; and a connection executing means for connecting to a wireless communication network associated with the connection setting information registered by the connection setting registering means.

According to the above invention, even if the communication terminal cannot be connected to the wireless communication network, connection setting information of a currently available wireless communication network is acquired from the management unit to which an "un-connectable" message is sent, by the connection setting information acquiring means. In addition, connection is made, by the connection executing means of the communication terminal, to the wireless communication network associated with the connection setting information acquired. Thus, the communication terminal carried by a user can be readily connected to a currently available wireless communication network, without the user having to perform connection setting of the wireless communication network by himself.

In the communication terminal of the present invention, it is preferred that the communication terminal further comprises, a search means for searching, if the wireless communication network, associated with the connection setting information registered in the user's terminal cannot be connected, one or more wireless communication networks existing around the user's terminal; and a wireless communication network extracting means for extracting, from the one or more wireless communication networks searched by the search means, a wireless communication network whose connection setting information is not yet registered in the user's terminal, and the connection setting information acquiring means transmits an identification code for identifying access points of the extracted wireless communication network described above to the management unit together with an "un-connectable" message.

In this manner, even if the communication terminal cannot be connected to wireless communication networks, an identification code for identifying, among the wireless communication networks which exist around the communication terminal, an access point of a wireless communication network whose connection setting information is not yet registered can be sent to the management unit together with the "un-connectable" message. This enables the management unit to provide connection setting information extracted, for example, based on the information relating to the wireless communication networks which exist around the communication terminal. In other words, the communication terminal can be readily connected to a currently available wireless communication network existing around the communication terminal.

### BRIEF DESCRIPTION OF THE DRAWINGS

Fig.1 is a diagram showing a system arrangement of a communication system according to a first embodiment;
Fig.2 is a block diagram showing a functional arrangement of a cellular phone shown in Fig.1;
Fig.3 is a sequence diagram for explaining the operation when the cellular telephone in the first embodiment is connected to an access point;
Fig.4 is a diagram showing an exemplary screen displayed on the cellular phone in the first embodiment;
Fig.5 is a diagram showing an exemplary screen displayed on the cellular phone in the first embodiment;
Fig.6 is a diagram showing a system arrangement of a communication system according to a second embodiment;
Fig.7 is a block diagram showing a functional arrangement of a management server shown in Fig.6;
Fig.8 is a sequence diagram for explaining the operation when a cellular telephone in the second embodiment is connected to an access point;
Fig.9 is a diagram showing an exemplary screen displayed on the cellular phone in the second embodiment;
Fig.10 is a diagram showing an exemplary screen displayed on the cellular phone in the second embodiment;
Fig.11 is a diagram showing, an exemplary screen displayed on the cellular phone in the second embodiment;
Fig.12 is a diagram showing a system arrangement of a communication system according to a third embodiment;
Fig.13 is a block diagram showing a functional arrangement of a cellular phone shown in Fig.12;
Fig.14 is a block diagram showing a functional arrangement of an AP management server shown in Fig.12;
Fig.15 is a sequence diagram for explaining the operation when the cellular telephone in the third embodiment is connected to an access point;
Fig.16 is a diagram showing an exemplary screen displayed on the cellular phone in the third embodiment;

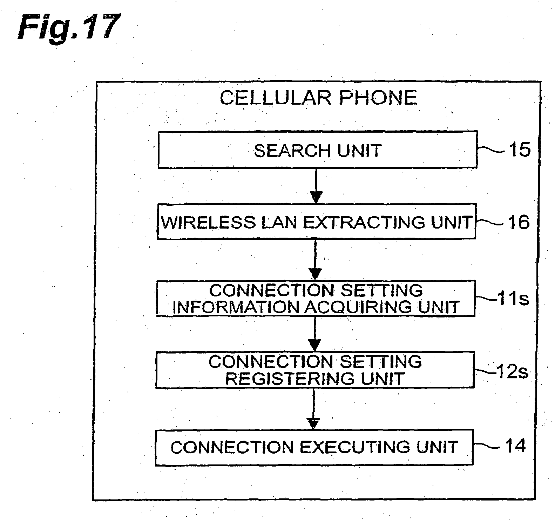

Fig.17 is a block diagram showing a functional arrangement cf the cellular phone in a variation of the third embodiment;
Fig.18 is a sequence diagram for explaining the operation when the cellular phone in the variation of the third embodiment connects to an access point;
Fig.19 is a diagram showing an arrangement of a recording medium; and
Fig.20 is a diagram showing an arrangement of a recording medium.

### DESCRIPTION OF THE PREFERRED EMBODIMENTS

In the hollowing, each embodiment of the communication system according to the present invention will be explained with reference to the drawings. Here, identical elements will be given identical numerals throughout the drawings and repetitive explanation is omitted.

### [First Embodiment]

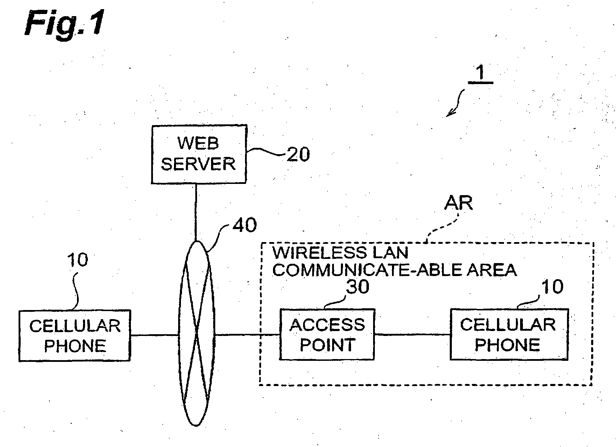

In the beginning, a first embodiment of the present invention will be described. Fig.1 is a diagram illustrating an arrangement of a communication system 1 in the first embodiment. As shown in Fig.1, the communication system 1 comprises a cellular phone 10(mobile terminal) equipped with a wireless LAN function; a web server 20 connectable to the Internet; an access point 30 located within a wireless LAN communicate-able area AR; and a communication network 40 including mobile communication networks or the Internet. If the cellular phone 10 exists within a wireless area of a mobile communication network, it connects to the web server 20 located on a predefined network included in the Internet via a base station or a switching station of mobile communication networks. In addition, the cellular phone 10 can be connected to the web server 20 on the Internet via the access point 30, when it exists within a wireless area of a wireless LAN (wireless communication network). Here, it is assumed that the wireless area of the wireless LAN is concurrently included in the wireless area of the mobile communication network.

Here, although the cellular phone 10 is set forth as an example of the communication terminal in the communication system 1 of the present embodiment, the invention is not limited to this. The communication terminal may be a mobile communication terminal such as a Personal Handy phone System (PHS) or a Personal Digital Assistant (PDA) having communication facility, for example. In addition, although each device composing the communication system 1 shown in Fig.1 actually includes a plurality of units respectively, only a single unit of each device is shown to avoid complication of the drawing.

Each device shown in Fig.1 will be described next. The cellular phone 10 is a mobile communication terminal for receiving call service or packet communication service by performing wireless communication with a base station or an access point 30 covering the wireless area in which the cellular phone 10 exists.

The web server 20 stores connection setting information with regard to connection setting for connecting the cellular phone 10 to a wireless LAN into a memory. The connection setting information includes, for example, a distinguishing ID of an access point (identification code of an access point), or an encryption key used by the cellular phone 10 when connecting to an access point. In the present embodiment, it is assumed that the distinguishing ID of an access point is registered in an SS-ID (Service Set Identifier) which is a connection setting item of a wireless LAN, and the encryption key is registered in a WEP (Wired Equivalent Privacy) which is a connection setting item of a wireless LAN. Here, it is necessary to set at least the distinguishing ID (SS-ID) of the access point as mandatory information as the connection setting information. However, setting the encryption key (WEP) may be optional.

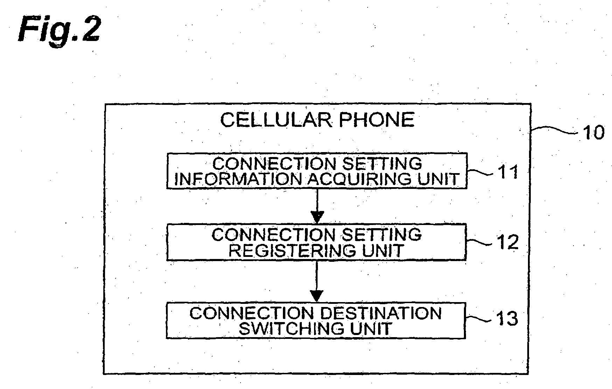

With reference to Fig.2, the functional arrangement of the cellular phone 10 composing the communication system 1 will be described next. As shown in Fig.2, the cellular phone 10 comprises a connection setting information acquiring unit 11 (connection setting information acquiring means); a connection setting registering unit 12 (connection setting registering means); and a connection destination switching unit 13 (a connection executing means).

The connection setting information acquiring unit 11 transmits, to the web server 20, a "connection setting information request" message which requests transmission of connection setting information for connecting to a wireless LAN to which a user wishes to connect, and receives the connection setting information sent back from the web server 20. In other words, the connection setting information acquiring unit 11 acquires, from the web server 20 on the Internet, connection setting information for connecting to the wireless LAN.

The connection setting information can be provided to the cellular phone 10 from the web server 20 by using, for example, the function of tag A defined as a link in HTML. Specifically, if the content of tag A is [<AHREF="SS-ID :xxx"WEP="yyy"> connect to wireless LAN<A/>], the cellular phone 10 can acquire, from the web server 20, connection setting information in which SS-ID is "xxx" and WEP is " yyy " by selecting and determining the "connect to wireless LAN" link displayed on the screen of the cellular phone 10.

Upon input of instruction requesting registration of connection setting by the user, the connection setting registering unit 12 registers the connection setting of the wireless LAN, based on the connection setting information acquired from the web server 20. Registration of connection setting is executed, for example, has follows. First, a browser of the cellular phone 10 which acquired the connection setting information passes the confection setting information to a wireless LAN connection application installed in the cellular phone 10. Next, the wireless LAN connection application then registers the data into the SS-ID or WEP, based on the connection setting information received from the browser.

Based on the registered connection setting information, the connection destination switching unit 13 switches the connection destination of the cellular phone 10 from the web server 20 on the Internet to the access point 30 of the wireless LAN. In other words, the connection destination switching unit 13 connects to the access point 30 of the wireless LAN, based on the registered connection setting information. Specifically, the connection destination switching unit 13 switches the connection destination of the cellular phone 10 from the web server 20 to the access point 30, if it determines that the cellular phone 10 exists within the wireless LAN communicate-able area AR of the access point 30 associated with the SS-ID of the connection setting information, based on, for example, beacon information output from the access point 30. Here, although the connection destination switching unit 13 switches the connection destination of the cellular phone 10 from the web server 20 to the access point 30 when connecting to the access point 30, it need not necessarily switch from the web server 20 to the access point 30. For example, it is not necessary to switch the communication network when connecting to the access point 30 of the wireless LAN after the communication network with the web server 20 is disconnected. In this case, the connection destination switching unit 13 may transmit a connection request to the access point 30 of the wireless LAN to be connected.

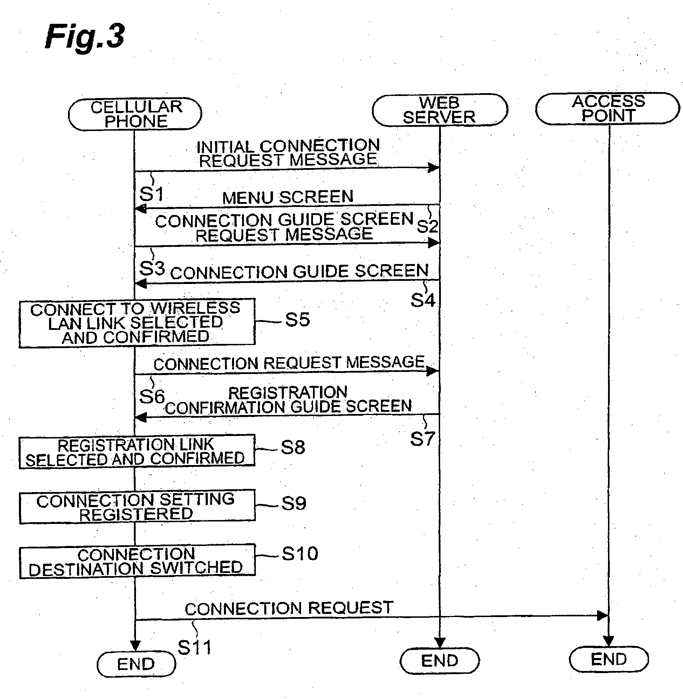

Next, in the communication system 1 of the first embodiment, operation of the cellular phone 10 when connecting to the access point 30 will be described with reference to Fig.3.

First, the cellular phone 10 transmits an "initial connection request" message for connecting to a web server 20 which exists on the Internet, according to the user's operational instruction (step S1). The web server 20 then transmits a menu screen of the web site to the cellular phone 10 (step S2), whereby a menu screen of the web site is displayed on the screen of the cellular phone 10.

Next, according to the user's operational instruction, the cellular phone 10 transmits, to the web server 20, a "connection guide screen request" message to display a connection guide screen for connecting to the wireless LAN, included in which is a connecting link to the wireless LAN to which the user wishes to connect (step S3).

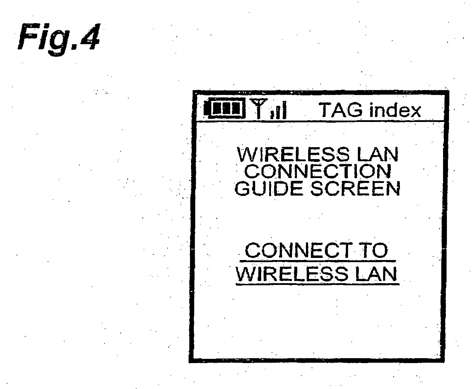

Next, the web server 20 generates, based on the connection setting information stored according to the message ID included in the connection guide screen request message, a "connect to wireless LAN" link and transmits the connection guide screen including the "connect to wireless LAN" link to the cellular phone 10 (step S4), whereby the connection guide screen including the "connect to wireless LAN" link is displayed on the screen of the cellular phone 10 (see Fig.4).

As shown in Fig.4, the "connect to wireless LAN" link for connecting to the wireless LAN is displayed on the guide screen to be connected. In the "connect to wireless LAN" link, SS-ID or WEP which are the connection setting information, are preliminarily set. Thus, the connection setting information acquiring unit 11 of the cellular phone 10 may acquire the connection setting information of the wireless LAN desired by the user, by receiving the connection guide screen including the "connect to wireless LAN" link. Here, the method of displaying the connection guide screen including the "connect to wireless LAN" link is not limited to the above-mentioned approach which traces the links starting from the menu screen. For example, it may be displayed by directly inputting the URL of the connection guide screen.

Next, when the "connect to wireless LAN" link displayed on the connection guide screen is selected and confirmed by the user (step S5), the connection setting information acquiring unit 11 of the cellular phone 10 transmits, to the web server 20, a connection request message for connecting to the wireless LAN (step S6).

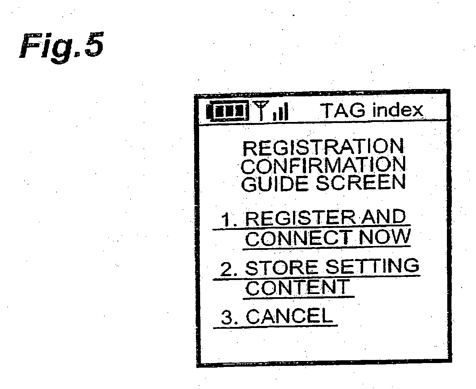

Next, upon receipt of the connection request message from the cellular phone 10, the web server 20 transmits a registration confirmation guide screen to the cellular phone 10 (step S7), whereby the registration confirmation guide screen to the wireless LAN is displayed on the screen of the cellular phone 10 (see Fig.5). On the registration confirmation guide screen, respective links such as, "1. register and connect now", "2. store setting content", "3. cancel" are displayed, as shown in Fig.5.

Next, for example, if "1. register and connect now" link on the registration confirmation guide screen is selected and confirmed by the user (step S8), the connection setting registering unit 12 of the cellular phone 10 registers the connection setting of the wireless LAN, based on the connection setting information acquired from the web server 20 (step S9), whereby the cellular phone 10 is enabled to connect to the access point 30 associated with the SS-ID included in the registered connection setting.

Next, the connection destination switching unit 13 of the cellular phone 10 switches the connection destination of the cellular phone 10 from the web server 20 to the access point 30, if it determines that the cellular phone 10 exists within the wireless LAN communicate-able area AR of the access point 30 associated with the SS-ID of the connection setting informations based on, for example, beacon information output from the access point 30(step S10), whereby the cellular phone 10 can connect to the access point 30 of the wireless LAN desired by the user (step S11).

Here, in step S8 described above, for example, if the "2. store setting content" link in the registration confirmation guide screen is selected by the user, the connection setting for the wireless LAN will be registered as is the case with step S9, but subsequent processes cf steps S10 and S11 will not be executed. This is because there is a possibility that the connection setting may be registered even if the cellular phone 10 exists outside the communicate-able area of the wireless LAN. In this manner, the connection setting information of the wireless LAN can be registered preliminarily, even if the cellular phone 10 exists outside the communicate-able area of the wireless by executing the registration of the connection seating of the wireless LAN.

As described above, the communication system 1 in the first embodiment allows the user to readily connect the cellular phone 10 carried by the user to the wireless LAN, without the user having to perform the connection setting by himself, because the connection setting registering unit 12 registers the connection setting information relating to an access point of the wireless LAN, based on the connection setting information acquired from the web server 20, and the connection destination switching unit 13 executes the connection process to the wireless LAN associated with the registered connection setting information.

Here, although the cellular phone 10 in the first embodiment acquires the connection setting information from the web server 20, the method of acquiring the connection setting information is not limited to this. For example, the cellular phone 10 may acquire connection setting information by a mail delivered by a mail server provided on a predefined network. In other words, the connection setting information managed by the system can be acquired from a web server or a mail server on the Internet.

### [Second Embodiment]

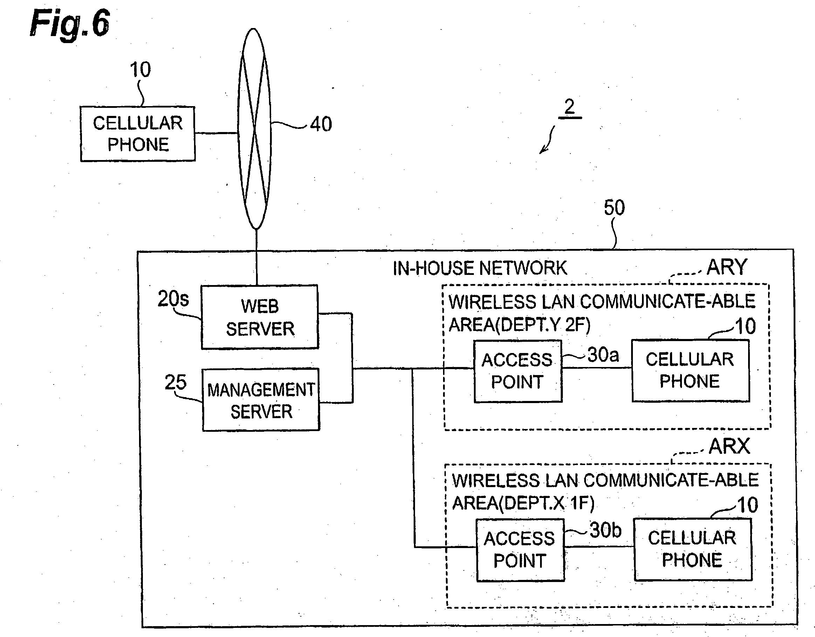

A second embodiment of the present invention will be described next. First, with reference to Fig.6, the arrangement of a communication system in the second embodiment is illustrated. As shown in Fig.6, the communication system 2 in the second embodiment differs from the communication system 1 in the first embodiment in that the cellular phone 10 connects to access points 30a and 30b of a wireless LAN (wireless communication network) included in an in-house network 50 (a predefined network; e.g. Intranet), whereas the cellular phone 10 of the communication systems 1 connects to the access point 30 on the Internet. In other words, the arrangement of the communication system 2 in the second embodiment differs from the arrangement of the communication system 1 in the first embodiment in that the access points 30a and 30b of the web server 20s and the wireless LAN are included in the in-house network 50, and that the in-house network 50 further comprises a management server 25. Here, because the functions of the cellular phone 10 and the communication networks 40 in the second embodiment are similar to those of the cellular phone 10 and the communication network 40 in the first embodiment, their description are omitted.

The web server 20s, being a server unit on the in-house network 50, is also accessible to the Internet. The web server 20s executes the verifying process or the connection process of the cellular phone 10 which requested connection to the in-house network 50 via the communication network 40.

The management server 25 stores in the memory and manages the information related to users having access right to the in-house network 50, and the connection setting information related to the connection setting for connecting to the wireless LAN, etc. User-related information includes, for example, user-ID, password, name, contact address, mail address, distinguishing ID of an user-accessible in-house access point (identification code of the access point), encryption key for use when connecting to the access point, etc. The connection setting information includes, for example, distinguishing ID of the access point, encryption key for use by the cellular phone 10 when connecting to the access point, etc. In the present embodiment, the distinguishing ID of the access point will be registered in an SS-ID which is an item in the connection setting of the wireless LAN, and the encryption key will be registered in a WEP which is an item in the connection setting of the wireless LAN. Here, as for the connection setting information, at least the distinguishing ID (SS-ID) of the access point must be set as a mandatory item, but the encryption key (WEP) may be optional.

The access points 30a and 30b, being the access points of the wireless LAN included in the in-house network 50, are installed in each department (e.g., Dept. X, Dept. Y) of the corporation or on each floor (e.g., the first floor, the second floor) of the office building. As shown in Fig.6, the access point 30a in the present embodiment is installed in Department Y on the second floor of the office building. The access point 30b is installed in Department X on the first floor of the office building. In addition, a wireless LAN communicate-able area ARY is composed of the access point 30a. Also, a wireless LAN communicate-able area ARX is configured by means of the access point 30b. Furthermore, WPM or 802. 1x, for example, may be used as security means of the wireless LAN in the present embodiment.

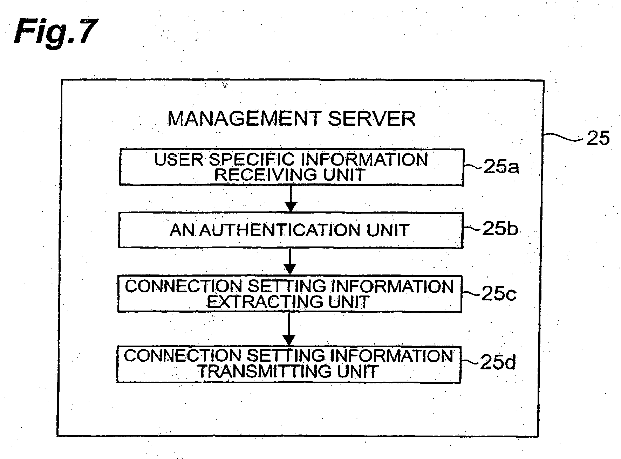

Next, the functional arrangement of the management server 25 composing the communication system 2 will be described with reference to Fig.7. As shown in Fig. 7, the management server 25 comprises a user specific information receiving unit 25a (user specific information receiving means), an authentication unit 25b (authentication means), a connection setting information extracting unit 25c (connection setting information extracting means) and a connection setting information transmitting unit 25d (connection setting information transmitting means).

The user specific information receiving unit 25a receives, from the web server 20s, user specific information for identifying a user carrying the cellular phone 10. The user specific information includes, for example, user ID or password of the user who carries the cellular phone 10.

The authentication unit 25b determines, based on the user specific information received by the user specific information receiving unit 25a, the validity of the user carrying the cellular phone 10.

Upon receipt of a "connection setting information extracting request" message for extracting connection setting information, the connection setting information extracting unit 25c extracts, based on the user ID included in the connection setting information extracting request message, the connection setting information preliminarily stored in association with the user ID.

The connection setting information transmitting unit 25d transmits, to the web server 20s, the connection setting information extracted by the connection setting information extracting unit 25c.

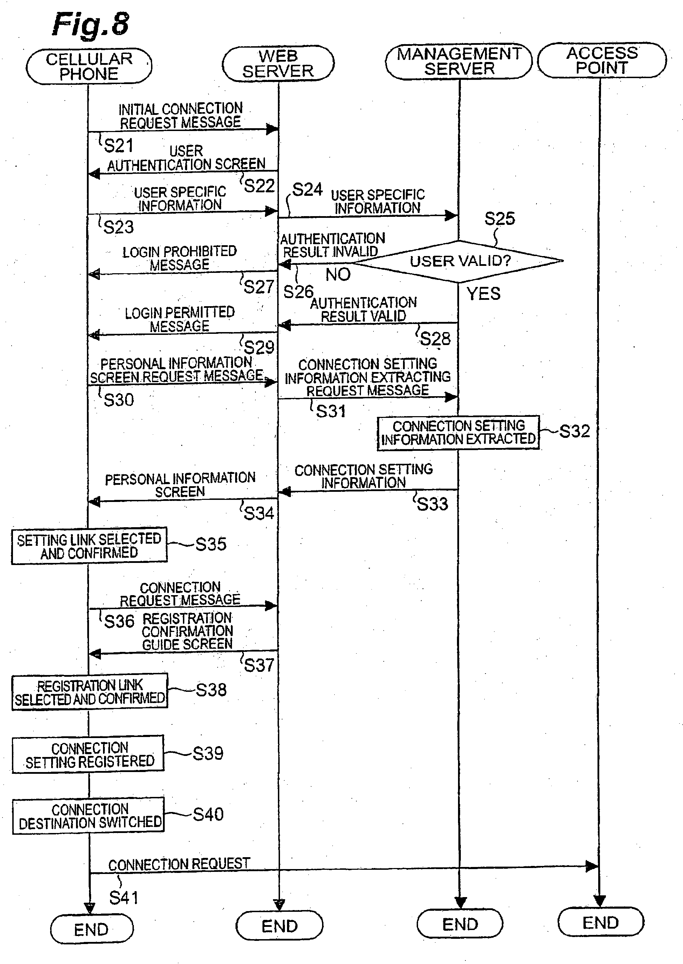

Next, in the communication system 2 in the second embodiment, operation of the cellular phone 10 when connecting to the access point 30a will be described with reference to Fig.8.

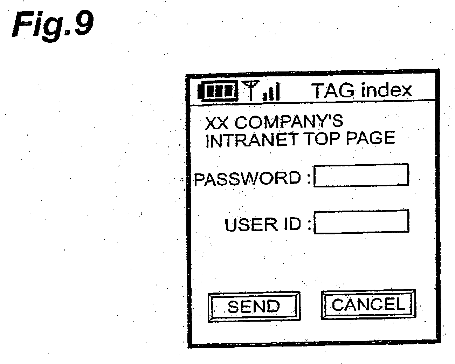

First, the cellular phone 10 transmits an initial connection request message for connecting to the web server 20s existing on the Internet, according to the user's operational instruction (step S21). The web server 20s then transmits a user authentication screen to the cellular phone 10 for letting the user who carries the cellular phone 10 login to the in-house network (step S22), whereby the user authentication screen is displayed on the screen of the cellular phone 10 (see Fig.9). As shown in Fig.9, input fields of user ID and password, a send button and a cancel button, for example, are displayed on the user authentication screen.

Next, according to the user's operational instruction, the cellular phone 10 transmits, to the web server 20s, the user ID and password entered into the user authentication screen as the user specific information (step S23). The web server 20s transmits, to the management server 25, the user specific information received from the cellular phone 10 (step S24), whereby the user specific information receiving unit 25a of the management server 25 receives the user specific information transmitted from the cellular phone 10, via the web server 20s.

Next, the authentication unit 25b of the management server 25 determines, based on the user specific information received by the user specific information receiving unit 25a, the validity of the user carrying the cellular phone 10 (step S25). If the result is NO (step S25; NO), the authentication unit 25b transmits, to the web server 20s, an authentication result indicating that the user is invalid (step S26). The web server 20s then transmits a "login prohibited" message to the cellular phone 10 (step S27). In other words, the cellular phone 10 carried by an invalid user cannot login to the in-house network 50, and will be excluded from the target of each process which will be described bellow.

On the other hand, in step S25, if the user is determined to be valid (step S25; YES), the authentication unit 25b transmits, to the web server 20s, the authentication result indicating that the user is valid (step S28). The web server 20s transmits a menu screen displaying a "login permitted" message to the cellular phone 10 (step S29).

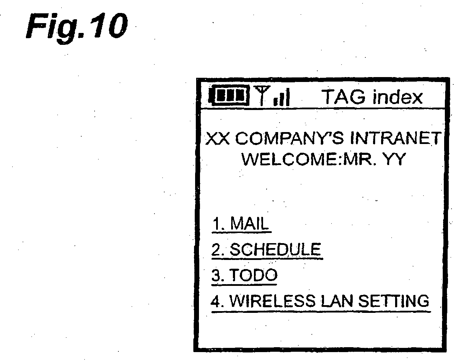

Next, when the "display personal information screen" is selected from the menu screen displayed on the screen and confirmed, according to the user's operational instruction, the connection setting information acquiring unit 11 of the cellular phone 10 transmits, to the web server 20s, a "personal information screen request" message for displaying a personal information screen (see Fig.10) (step S30). Here, the personal information screen displays, for example, respective links "1. mail", "2. schedule", "3. To Do", "4. wireless LAN setting", as shown in Fig.10.

Next, the web server 20s transmits, to the management server 25, a "connection setting information extracting request" message for extracting connection setting information associated with the cellular phone 10, based on the "personal information screen request" message received from the cellular phone 10(step S31).

Next, upon receipt of the "connection setting information extracting request" message from the web server 20s, the connection setting information extracting unit 25c of the management server 25 extracts, based on the user ID included in the "connection setting information extracting request" message, the connection setting information preliminarily stored in association with the user ID (step S32). The connection setting information transmitting unit 25d of the management server 25 transmits the connection setting information extracted by the connection setting information extracting unit 25c to the web server 20s (step S33).

The web server 20s generates a "4. wireless LAN setting" link, based on the connection setting information received from the management server 25, and transmits the personal information screen including the "4. wireless LAN setting" link to the cellular phone 10 (step S34), whereby the personal information screen including the "4. wireless LAN setting" link is displayed on the screen of the cellular phone 10 (see Fig.10). SS-ID and WEP, which are the connection setting information, are set in the "4. wireless LAN setting" link. Thus, by receiving the personal information screen including the "4. wireless LAN setting" link, the connection setting information acquiring unit 11 of the cellular phone 10 acquires, from the management server 25, connection setting information individually assigned to each user for connecting to the wireless LAN in the in-house network 50.

Next, if the "4. wireless LAN setting" link displayed on the personal information screen is selected and confirmed by the user (step 535), the connection setting information acquiring unit 11 of the cellular phone 10 transmits, to the web server 20, a connection request message for connecting to the wireless LAN (step S36).

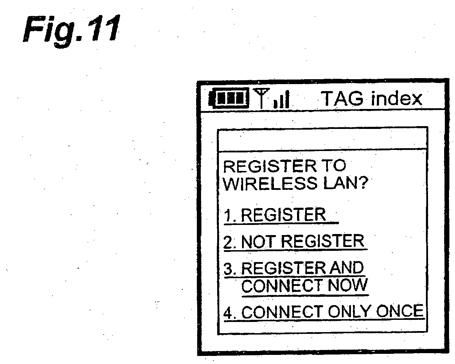

Next, upon receipt of the connection request message from the cellular phone 10, the web server 20s transmits a registration confirmation guide screen to the cellular phone 10 (step S37), whereby the registration confirmation guide screen for the wireless LAN is displayed on the screen of the cellular phone 10 (see Fig.11). The registration confirmation guide screen for the wireless LAN displays, for example, respective links "1. register", "2. not register", "3. register and connect now", "4. connect only once", as shown in Fig.11.

Next, for example, if "3. register and connect now" link on the registration confirmation guide screen is selected and confirmed by the user (step S38), the connection setting registering unit 12 of the cellular phone 10 registers the connection setting of the wireless LAN, based on the connection setting information acquired from the web server 20 (step S39), whereby the cellular phone 10 is enabled to connect to the access point 30a associated with the SS-ID included in the registered connection setting.

Next, the connection destination switching unit 13 of the cellular phone 10 determines, based on beacon information output from the access point 30a, whether or not the cellular phone 10 exists within the (wireless LAN communicate-able area ARY of the access point 30a associated with the SS-ID of the connection setting information. Then, the connection destination switching unit 13 switches, if it determines that the cellular phone 10 exists within the area ARY, the connection destination of the cellular phone 10 from the web server 20 to the access point 30a (step S40), thereby enabling the cellular phone 10 to connect to the access point 30a of the wireless LAN installed in the Department Y desired by the user (step S41).

Here, in step S38 described above, for example, if the "1. register" link in the registration confirmation guide screen is selected and confirmed by the user, the connection setting for the wireless LAN will be registered as is the case with step S39, but subsequent processes of steps S40 and S41 will not be executed. This is because there is a possibility that the connection setting may be registered even if the cellular phone 10 exists outside the communicate-able area of the wireless LAN. In this manner, the connection setting information of the wireless LAN can be registered preliminarily, even if the cellular phone 10 exists outside the communicate-able area of the wireless LAN, by executing registration of the connection setting of the wireless LAN.

As described above, in the communication system 2 in the second embodiment, the management server 25 receives user specific information transmitted from the cellular phone 10 and transmits the connection setting information associated with the received user specific information back to the cellular phone 10. Thus, different connection setting information for individual users can be transmitted respectively to cellular phones carried by respective users. In other words, a cellular phone carried by a user can be readily connected to a connectable wireless communication network, without the user having to perform connection setting for the wireless communication network by himself.

In addition, the connection setting information extracting unit 25c of the management server 25 extracts the connection setting information only if the authentication unit 25b determines that the user is valid. Thus, the cellular phone 10 can be readily connected, for example, even if the wireless communication network to be connected is built in an in-house network 50 which requires advanced security, without the user having to perform connection setting of the wireless communication network by himself.

Here, in the second embodiment described above, although the server unit of the in-house network 50 comprises the web server 20s and the management server 25, but the arrangement of the server unit is not limited to this. For example, there may be an arrangement comprising only a single server unit having both functions of the web server 20s and the management server 25, or the functions of the management server 25 may be distributed on additionally provided servers such as an authentication server and a DB server.

Furthermore, in the first and the second embodiments, although the cellular phone 10 is connected to the web server 20 or 20s via the Internet, the communication network between the cellular phone 10 and the web server 20 or 20s is not limited to the Internet. It may be, for example, a closed area network such as an Intranet built in-house, or a closed area network (predefined network) built by an ISP (Internet Services Provider). In other words, the cellular phone 10 may acquire the connection setting information for connecting to the wireless communication network from a web server or a mail server on a closed area network, and may switch the network of the connection destination from the closed area network to the wireless communication network, based on the connection setting information.

Also in the first and the second embodiments, although the cellular phone 10 automatically switches the connection destination of the cellular phone 10 from the web server 20 or 20s to the access point 30 or 30a after having registered the connection setting of the wireless LAN, the connection destination of the cellular phone 10 need not necessarily be the access point 30 or 30a which was selected when registering the connection setting. For example, the user may be allowed to preliminarily set the connection destination to be automatically switched. A "wireless LAN" or a "mobile wireless communication network" may be set as the connection destination, for example. It may also be possible to initially set, at the cellular phone, a connection destination to be automatically switched, and display a screen for confirming the connection destination each time a connection process is executed, thereby enabling the user to select a connection destination from the confirmation screen.

### [Third Embodiment]

A third embodiment of the present invention will be described next. The communication system in the third embodiment is characterized in that, a cellular phone acquires connection setting information relating to access points of other wireless LANs currently available if the cellular phone failed to connect to an access point of a wireless LAN (wireless communication network) associated with the connection setting information already registered in the cellular phone. In this point, the communication system in the third embodiment differs from the communication system in the first and the second embodiments wherein the cellular phone connects to a predefined network by the user's operational instruction and acquires connection setting information relating to an access point of a particular wireless LAN from the connected predefined network.

Here, the connection setting information includes, for example, a distinguishing ID (access point identification code) of the access point, an encryption key for use by the cellular phone (communication terminal) when connecting to the access point, etc. In the present embodiment, the distinguishing ID of the access point will be registered in an SS-ID which is an item in the connection setting of the wireless LAN, and the encryption key will be registered in a WEP which is an item in the connection setting of the wireless LAN. Here, as for the connection setting information, at least the distinguishing ID (SS-ID) of the access point must be set as a mandatory item, but the encryption key (WEP) may be optional.

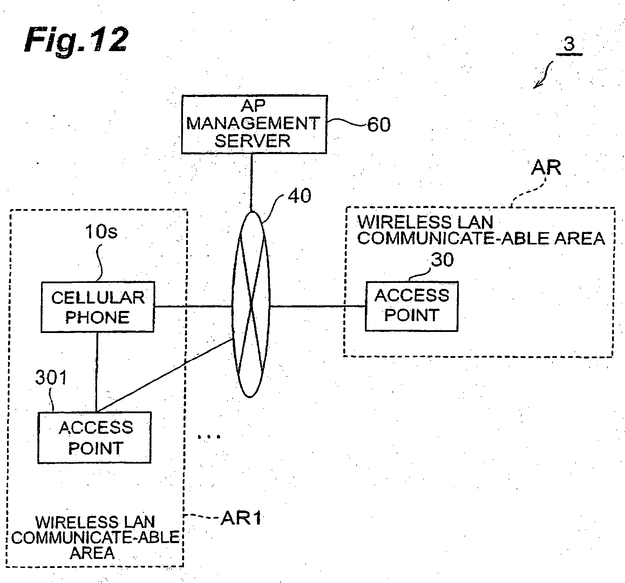

With reference to Fig.12, an arrangement of a communication system in the third embodiment will be described. As shown in Fig.12, a communication system 3 in the third embodiment comprises a cellular phone 10s equipped with wireless LAN functions, an AP management server 60 (management unit), access points 30 and 301, and a communication network 40.

The communication system 3 differs from the communication systems 1 and 2 which comprise the web server 20 (the first embodiment) or the management server 25 (the second embodiment) for managing the connection setting information relating to an access point of a particular wireless LAN, in that the communication system 3 comprises the AP management server 60 for managing the connection setting information relating to access points of various wireless LANs.

In addition, for convenience of description, the access point 30 shown in Fig.12 is assumed to be an access point whose connection setting information relating to the access point 30 is already registered in the cellular phone 10s. On the contrary, the access point 301 shown in Fig. 12 is an access point whose connection setting information relating to the access point 301 is not yet registered in the cellular phone 10s, and also an access point currently available by the cellular phone 10s. Here, a currently available access point means an access point where the cellular phone 10s exists within a wireless LAN communicate-able area covered by the access point, or is expected to exist.

Here, because the functions of the access point 30 (including access point 301) and the communication network 40 in the third embodiment are similar to those of the access point 30 and the communication network 40 in the first embodiment, their descriptions are omitted. In the followings, the functional arrangement of the cellular phone 10s and the AP management server 60 having functions specific to the third embodiment will be described.

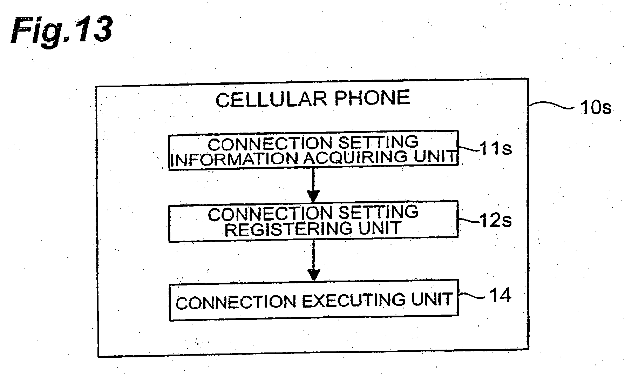

With reference to Fig.13, the functional arrangement of the cellular phone 10s composing the communication system 3 will be described. As shown in Fig.13, the cellular phone 10s comprises a connection setting information acquiring unit 11s (connection setting information acquiring means), a connection setting registering unit 12s (connection setting registering means), and a connection executing unit 14 (connection executing means).

If the connection setting information acquiring unit 11s failed to connect to the access point 30 of the wireless LAN associated with the connection setting information already registered in the cellular phone 10s, it transmits, to the AP management server 60, an "un-connectable" message indicating the connection failure. In addition, the connection setting information acquiring unit 11s receives the connection setting information sent back from the AP management server 60. In other words, the connection setting information acquiring unit 11s acquires, from the AP management server 60, the connection setting information for the cellular phone 10s to connect to a currently available wireless LAN.

The connection setting registering unit 12s registers the connection setting of the wireless LAN, based on the connection setting information acquired from the AP management server 60. Registration of connection setting is executed, for example, as follows. First, a browner of the cellular phone 10s which acquired the connection setting information passes the connection setting information to a wireless LAN connection application installed in the cellular phone 10s. Next, the wireless LAN connection application then registers the data into SS-ID or WEP, based on the connection setting information received from the browser.

The connection executing unit 15 executes, based on the connection setting information newly registered in the cellular phone 10s, connection to the access point 301 of the wireless LAN. More particularly, the connection executing unit 15 executes connection to the access point 301, if it determines that the cellular phone 10s exists within the wireless LAN communicateable area AR1 of the access point 301 associated with the SS-ID of the connection setting information, based on, for example, beacon information output from the access point 301.

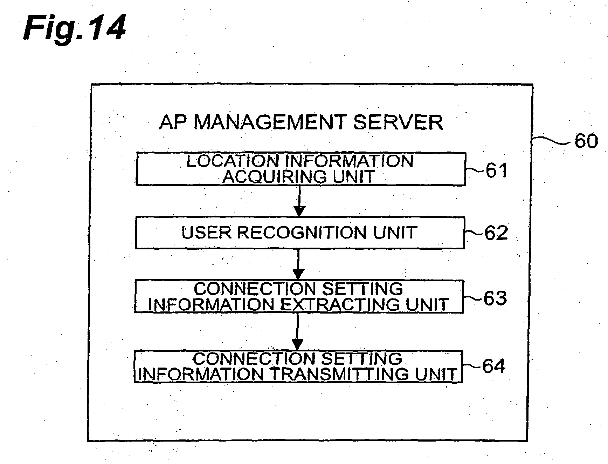

Next, with reference to Fig.14, the functional arrangement of the AP management server 60 composing the communication system 3 will be described. The AP management server 60 stores and manages the connection setting information relating to the connection setting for correcting to various wireless LANs in a database (not shown) on a memory.

As shown in Fig. 14, the AP management server 60 comprises a location information acquiring unit 61 (location information acquiring means), a user recognition unit 62, a connection setting information extracting unit 63 (a connection setting information extracting means), and a connection setting information transmitting unit 64 (a connection setting information transmitting means).

The location information acquiring unit 61 receives the "un-connectable" message sent from the cellular phone 10s and the telephone number called from the cellular phone 10s. In addition, the location information acquiring unit 61 acquires, from the mobile wireless communication network 40 (communication network managing the location information of the communication terminal), the location information relating to the location where the cellular phone 10s currently exists, based on the received telephone number. The location information includes, for example, the base station code of the base station covering the area where the cellular phone 10s exists.

The user recognition unit 62 acquires, from the mobile wireless communication network 40, contract information relating to the user of the cellular phone 10s, based on the telephone number received by the location information acquiring unit 61. The user recognition unit 62 recognizes, based on the acquired contract information, the user carrying the cellular phone 10s. Here, the contract information includes, for example, telephone number, user name, tariff plan, communication method, type of available wireless LAN, etc. By acquiring such contract information, the AP management server 60 can provide each user with connection setting information to a wireless LAN according to the type of the wireless LAN which the user is subscribing, for example.

The connection setting information extracting unit 63 extracts, based on the contract information of the user and the location information of the cellular phone 10s, one or more preliminarily stored connection setting information associated with the contract information and the location information. In other words, the connection setting information extracting unit 63 extracts the connection setting information of the wireless LAN which is currently available by the cellular phone 10s, based on the type of the wireless LAN which the user is subscribing, or the location where the cellular phone 10s currently exists, for example.

The connection setting information transmitting unit 64 transmits one or more pieces of connection setting information extracted by the connection setting information extracting unit 63 to the cellular phone 10s.

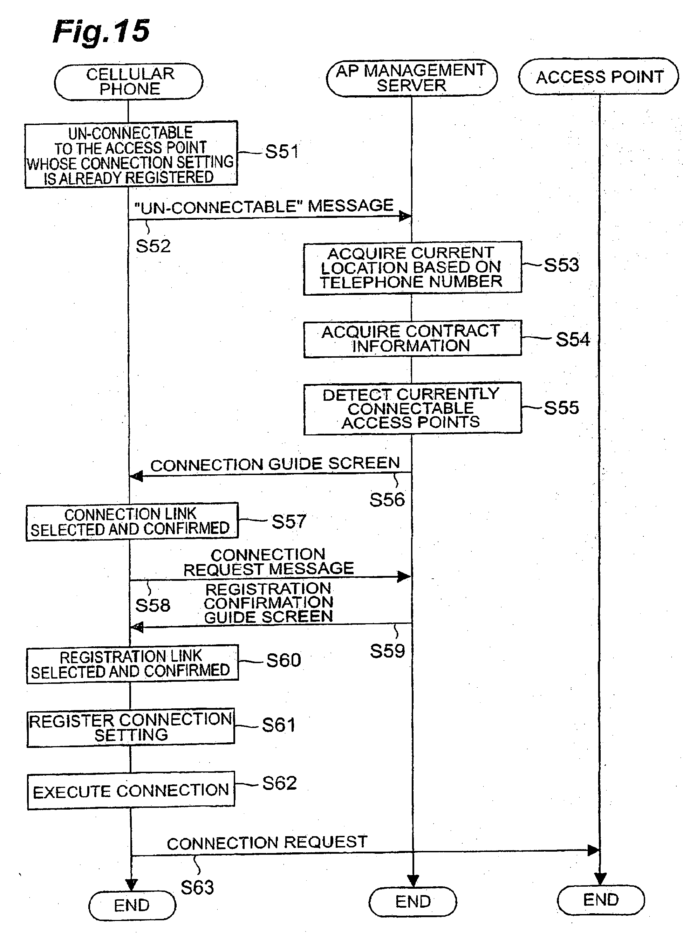

Next, in the communication system 3 of the third embodiment, operation of the cellular phone 10s when connecting to an access point 301 whose connection setting information is not yet registered in the cellular phone 10s will be described with reference to Fig.15.

First, the cellular phone 10s transmits, according to the user's operational instruction, a connection request to the access point 30 whose connection setting information is already registered in the cellular phone 10s (see Fig.12). If, for example, connection to the access point 30 failed (step S51), the connection setting information acquiring unit 11s of the cellular phone 10s transmits an "un-connectable" message to the AP management server 60 (step S52).

Next, the location information acquiring unit 61 of the AP management server 60 receives the "un-connectable" message sent from the cellular phone 10s and receives the telephone number called from the cellular phone 10s. In addition, the location information acquiring unit 61 acquires, from the mobile wireless communication network 40, the location information relating to the location where the cellular phone 10s currently exists, based on the received telephone number (step S53). Thus, by acquiring the location information of the cellular phone 10s from the mobile wireless communication network 40, a wireless LAN which is built around the location recognized from the acquired location information can be searched. In other words, a wireless LAN existing around the cellular phone 10s can be detected, based on the location information of the cellular phone 10s.

Next, the user recognition unit 62 of the AP management server 60 acquires contract information of the user from the mobile wireless communication network 40, based on the telephone number received by the location information acquiring unit 61 (step S54), whereby the user carrying the cellular phone 10s can be determined and the type of the wireless LAN which the user is subscribing can be recognized.

Next, the connection setting information extracting unit 63 of the AP management server 60 detects, based on the contract information of the user and the location information of the cellular phone 10s, the access point of the wireless LAN currently available by the cellular phone 10s (step S55). In other words, the connection setting information extracting unit 63 extracts, based on the contract information and the location information, the connection setting information relating to access points of one or more wireless LANs currently available by the cellular phone 10s.

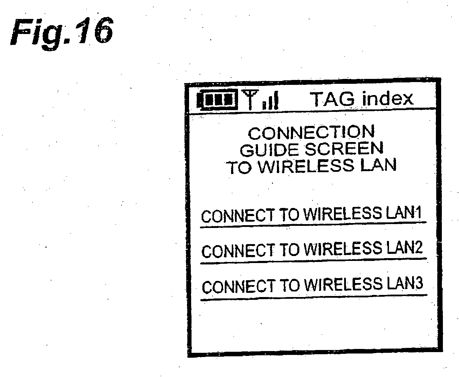

Next, the AP management server 60 generates, based on one or more pieces of connection setting information extracted by the connection setting information extracting unit 63, a "connect to wireless LAN" link and transmits a connection guide screen including the " connect to wireless LAN" link to the cellular phone 10s (step S56). In addition, if there are a plurality of extracted connection setting information, the "connect to wireless LAN" link is generated for each of the connection setting information, whereby a connection guide screen including a plurality of "connect to wireless LAN" link is displayed on the screen of the cellular phone 10s (see Fig.16).

The connection guide screen shown in Fig.16 displays three links for connecting to the wireless LANs. In these three connecting links, an SS-ID and a WEP, being the connection setting information, are set respectively. Thus, the connection setting information acquiring unit 11s of the cellular phone 10s acquires, from AP management server 60, the connection setting information of the wireless LAN currently available by the cellular phone 10s, by receiving the connection guide screen including these connecting links.

Next, if any one of the "connect to wireless LAN" links displayed on the connection guide screen is selected and confirmed by the user (step S57), the connection setting information acquiring unit 11s of the cellular phone 10s transmits, to the AP management server 60, a connection request message for connecting to the wireless LAN (step S58). It is assumed here, for convenience of description, that the connecting link for connecting to the wireless LAN by the access point 301 shown in Fig.12 is selected.

Next, upon receipt of the connection request message from the cellular phone 10s, the AP management server 60 transmits a registration confirmation guide screen to the cellular phone 10s (step S59), whereby the registration confirmation guide screen for the wireless LAN by access point 301 is displayed on the screen of the cellular phone 10s (see Fig.5). The registration confirmation guide screen for the wireless LAN displays, for example, respective links "1. register and connect now", "2. store setting content", "3. chancel", as shown in Fag.5.

Next, for example, if "1. register and connect new" link on the registration confirmation guide screen is selected and confirmed by the user (step S60), the connection setting registering unit 12s of the cellular phone 10s registers the connection setting of the wireless LAN, based on the connection setting information acquired from the AP management server 60 (step S61), whereby the cellular phone 10s is enabled to connect to the access point 301 associated with the SS-ID included in the newly registered connection setting.

Next, the connection executing unit 14 of the cellular phone 10s determines, based on beacon information output from the access point 301, whether or not the cellular phone 10s exists within the wireless LAN communicate-able area AR1 of the access point 301 associated with the SS-ID of the connection setting information. The connection executing unit 14 then executes, if it determines that the cellular phone 10 exists within the area AR1, connection to the access point 301 (step S62), thereby enabling the cellular phone 10s to connect to the access point 301 of the currently available new wireless LAN (step S63).

Here, in step S60 described above, for example, if the "2. store setting content" link in the registration confirmation guide screen is selected and confirmed by the user, the connection setting for the wireless LAN will be registered as is the case with step S61, but subsequent processes of steps S62 and S63 will not be executed. This is because there is a possibility that connection may not be executed at the present time but the connection setting may be tentatively registered for possible connection later, even if the cellular phone 10s exists within the communicate-able area of the wireless LAN.

As described above, in the communication system 3 in the third embodiment, the connection setting information of currently available wireless LANs can be acquired from the AP management server 60 by the connection setting information acquiring unit 11s even if the cellular phone 10s cannot connect to the wireless LAN. In addition, the connection executing unit 14 executes connection to the wireless LAN associated with the acquired connection setting information Thus, the cellular phone 10s carried by the user can be readily connected to a currently available wireless LAN, without the user having to perform connection setting of the wireless LAN by himself.

In addition, the location information acquiring unit 61 of the AP management server 60 acquires the location information of the cellular phone 10s from the mobile wireless communication network 40, based on the telephone number called by the cellular phone 10s. Furthermore, the connection setting information extracting unit 63 of the AP management server 60 extracts the connection setting information of the wireless LAN currently available by the cellular phone 10s, based on the contract information and the location information acquired based on the telephone number. Thus, the extracted connection setting information can be transmitted to the cellular phone 10s as the connection setting information of the wireless LAN currently available by the cellular phone 10s.

Here, in the third embodiment described above, although the data base storing the connection setting information is built on the memory of the AP management server 60, the data base for storing the connection setting information need not necessarily be built on the memory of the AP management server 60. For example, it may be built on the memory of a database server provided separately with the AP management server 60.

In addition, although the AP management server 60 in the third embodiment detects the access point of the wireless LAN currently available by the cellular phone 10s, based on the location information of the cellular phone 10s acquired from the mobile wireless communication network, the method of detecting access points currently available by the cellular phone 10s is not limited to this.

For example, the cellular phone 10s may search wireless LANs which exist around the cellular phone 10s and detect, based on the information relating to the searched wireless LANs (for example, installation sites of access points), the access point whose connection setting information is not yet registered in the cellular phone 10s. In other words when, as shown in Fin.17, if the cellular phone 10s cannot be connected to the wireless LAN associated with the connection setting information registered in the cellular phone 10s, it may further comprise a search unit 15 (search means) for searching one or more wireless LANs which exist around the cellular phone 10s, and a wireless LAN extracting unit 16 (a wireless communication network extracting means) for extracting, from the one or more wireless LANs searched by the search unit 15, the wireless LAN whose connection setting information is not yet registered in the cellular phone 10s. In addition, the connection setting information acquiring unit 11s may transmit, to the AP management server 60, the SS-ID which is the distinguishing ID for identifying the access point of the extracted wireless LAN, together with an "un-connectable" message.

In this exemplary variation, the AP management server 60 may recognize, based on each SS-ID which is the distinguishing ID of one or more access points received from the cellular phone 10s, the approximate location of the cellular phone 10s and provide the cellular phone 10s with connection setting information relating to an access point of the wireless LAN which exists around the location. In other words, the connection setting information extracting unit 63 extracts the connection setting information relating to access points of one or more wireless LANs currently available by the cellular phone 10s, based on the telephone number received by the location information acquiring unit 61 and the location information acquired by the location information acquiring unit 61, and further on the identification code of one or more access points received from the cellular phone 10s. Since this enables the AP management server 60 to recognize the current location of the cellular phone 10s more precisely, the AP management server 60 can provide the cellular phone 10s with more effective connection setting information.

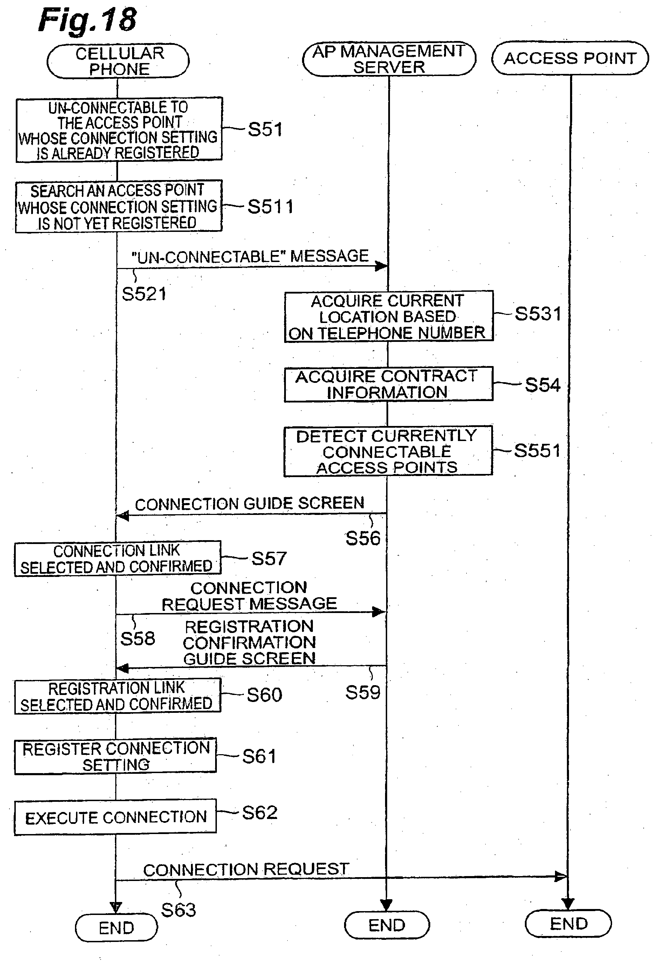

In this exemplary variation, operation of the cellular phone 10s when connecting to the access point 301 whose connection setting information is not registered will be described with reference to Fig.18. Here, steps shown in Fig.18 which perform identical processes as the steps shown in Fig.15 are given identical step numerals as the step numerals shown in Fig.15, and their descriptions are omitted.

First, the cellular phone 10s transmits, according to the user's operational guidance, a connection request to the access point 30 of the wireless LAN whose connection setting information is already registered (see Fig.12). As a result, if it is determined that the access point 30 cannot be connected (step S51), the connection setting information acquiring unit 11s of the cellular phone 10s searches the wireless LANs which exist around the cellular phone 10s (step S511). The connection setting information acquiring unit 11s then detects an access point whose connection setting information is not yet registered in the cellular phone 10s. The connection setting information acquiring unit 11s transmits, to the AP management server 60, an "un-connectable" message including the SS-ID of the detected access point (step S521).

Next, the location information acquiring unit 61 of the AP management server 60 receives the "unconnectable" message including the SS-ID of the access point sent from the cellular phone 10s, together with the telephone number called from the cellular phone 10s. In addition, the location information acquiring unit 61 acquires, from the mobile wireless communication network 40, the location information relating to the location where the cellular phone 10s currently exists, based on the received telephone number (step S531).

Next, the user recognition unit 62 of the AP management server 60 acquires, based on the telephone number received by the location information acquiring unit 61, the contract information of the user from the mobile wireless communication network 40 (step S54), whereby the user possessing the cellular phone 10s can be determined, and the type or the like of the wireless LAN which the user is already subscribing can be recognized.

Next, the connection setting information extracting unit 63 of the AP management server 60 detects an access point of the wireless LAN currently available by the cellular phone 10s, based on the contract information of the user, the location information of the cellular phone 10s, and the SS-ID of the access point (step SS51). In other words, the connection setting information extracting unit 63 extracts the connection setting information relating to the access point of the wireless LAN currently available by the cellular phone 10s, based on the contract information acquired based on the telephone number received by the location information acquiring unit 61, the location information acquired by the location information acquiring unit 61, and the identification codes of one or more access points received from the cellular terminal 10s. Then step S56 and subsequent steps are executed similarly as the processes in the third embodiment.

With the communication system in the exemplary variation of the third embodiment, as described above, even if the cellular phone 10s cannot connect to a wireless LAN, the AP management server 60 may transmit the identification code for identifying an access point of the wireless LAN which exists around the cellular phone 10s, and whose connection setting information is not yet registered in the cellular phone 10s, together with an "un-connectable" message. This enables the AP management server 60 to extract the connection setting information, based on the identification code for identifying access points of wireless LANs which exist around the cellular phone 10. Thus, the AP management server 60 can provide the cellular phone 10s with the extracted connection setting information. In other words, the AP management server 60 is enabled to provide the cellular phone 10s with the connection setting information extracted based on the information (e.g., location information of access points, type information of wireless LANs) relating to wireless LANs which exist around the cellular phone 10s. This enables the cellular phone 10s to be readily connected the wireless LAN existing around and currently available by the cellular phone 10s.

Note that each of the above embodiments can be implemented in combination. For example, the communication system in the first or the second embodiment may be combined with the communication system in the third embodiment. In other words, the communication systems in the entirety of the first embodiment through the third embodiment, or in some of the embodiments can be desirably combined.

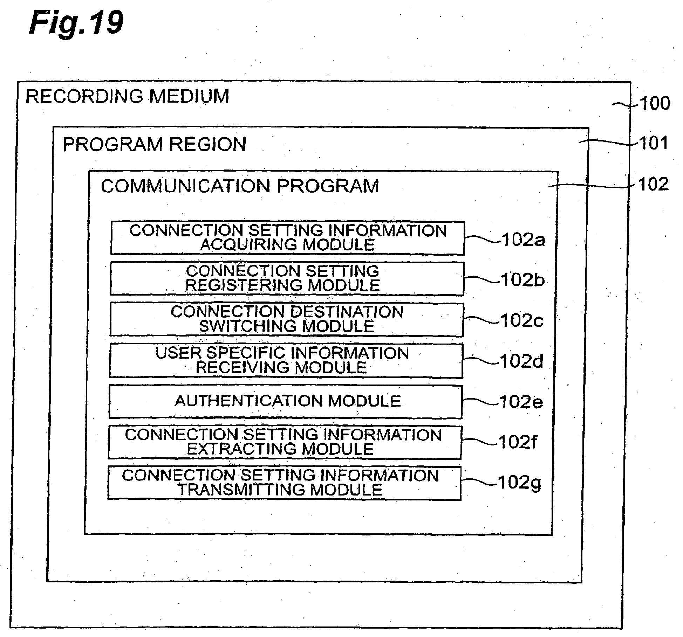

Finally, a communication program relating to each of the embodiments of the present invention, and a recording medium which records the communication program will be described. Fig.19 is a block diagram of a recording medium relating to the embodiments of the present invention. As shown in Fig.19, the recording medium 100 comprises a program region 101 for recording the program. In the program region 101, a communication program 102 is recorded. The communication program 102 comprises a connection setting information acquiring module 102a, a connection setting registering module 102b, a connection destination switching module 102c, a user specific information receiving module 102d, an authentication module 102e, a connection setting information extracting module 102f and a connection setting information transmitting module 102g. Here, the functions realized by operating each of the above mentioned modules 102a to 102g are similar to respective functions of, the connection setting information acquiring unit 11, the connection setting registering unit 12, the connection destination switching unit 13 of the cellular phone 10; the user specific information receiving unit 25a, the authentication unit 25b, the connection setting information extracting unit 25c, and the connection setting information transmitting unit 25d of the management server 25. Here, the communication program 102 may divided into a first communication program comprising the connection setting information acquiring module 102a, the connection setting registering module 102b and the connection destination switching module 102c, and a second communication program comprising the user specific information receiving module 102d, the authentication module 102e, the connection setting information extracting module 102f and the connection setting information transmitting module 102g to be stored in separate recording media.

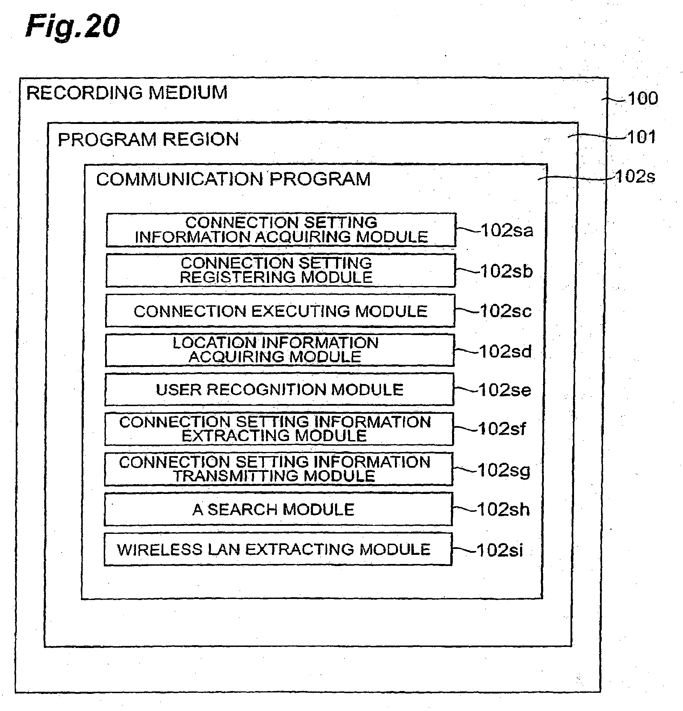

In addition, as shown in Fig.20, the communication program 102s may comprise a connection setting information acquiring module 102sa, a connection setting registering module 102sb, a connection executing module 102sc, a location information acquiring module 102sd, a user recognition module 102se, a connection setting information extracting module 102sf, a connection setting information transmitting module 102sg, a search module 102sh, and a wireless LAN extracting module 102si. Here, the functions realized by operating each of the above mentioned modules 102sa to 102si are similar to respective functions, of the connection setting information acquiring unit 11s, the connection setting registering unit 12s, the connection executing unit 14 of the cellular phone 10s; the location information acquiring unit 61, the user recognition unit 62, the connection setting information extracting unit 63, the connection setting information transmitting unit 64 of the AP management server 60; the search unit 15, the wireless LAN extracting unit 16 of the cellular phone 10s. Here, the communication program 102s may divided into a first communication program comprising the connection setting information acquiring module 102sa, the connection setting registering module 102sb, the connection executing module 102sc, the search module 102sh, and the wireless LAN extracting module 102si, and a second communication program comprising the location information acquiring module 102sd, the user recognition module 102se, the connection setting information extracting module 102sf and the connection setting information transmitting module 102sg to be respectively stored in separate recording media.

As described above, according to the communication system, the communication terminal and the communications program of the present invention, the communication terminal can be readily connected to a wireless communication network, without the user having to perform complicated settings.

## Claims

1. A communication system (3) comprising a communication terminal and a management unit (60) for managing connection setting information for connecting to a wireless communication network (30),
wherein the communication terminal (10s) comprises:
a connection setting information acquiring means for transmitting, to the management unit (60), an "un-connectable" message indicating that a wireless communication network (301) associated with the connection setting information registered in the communication terminal (11s) cannot be connected, and for acquiring, from the management unit (60), the connection setting information of a wireless communication network (30) currently available by the communication terminal (10s);
• a connection setting registering means (12s) for registering the connection setting information acquired by the connection setting information acquiring means (11s); and
• a connection executing means (13, 14) for connecting to a wireless communication network (30) associated with the connection setting information registered by the connection setting registering means (12s), and
the management unit (60) comprises:
• a location information acquiring means (61) for acquiring location information of the communication terminal (10s) from a communication network (40) which manages location information of the communication terminal (10s), based on a telephone number called from the communication terminal (11s) which sent the "un-connectable" message, if the "un-connectable" message is received from the communication terminal (11s);
• a connection setting information extracting means (63) for extracting, from the connection setting information of the wireless communication network (40) preliminarily stored, the connection setting information of a wireless communication network (30) currently available by the communication terminal (11s), based on the called telephone number and the acquired location information; and
• a connection setting information transmitting means (64) for transmitting the extracted connection setting information to the communication terminal (11s).

2. The communication system according to claim 1, wherein
• the connection setting information includes at least an access point identification code for identifying access points (30) of the wireless communication network, and
• the connection executing means (13, 14) connects to the wireless communication network (30), based on the access point identification code.

3. A communication terminal (10s) connectable to a management unit (60) which manages connection setting information for connecting to a wireless communication network (30, 301),
wherein the communication terminal (10s) comprises:
• a connection setting information acquiring means (11s) for transmitting, to the management unit (60), an "un-connectable" message indicating that a wireless communication network (301) associated with the connection setting information registered in the communication terminal (10s) cannot be connected, and for acquiring, from the management unit (60), the connection setting information of a wireless communication network (30) currently available by the communication terminal (10s);
• a connection setting registering means (12s) for registering the connection setting information acquired by the connection setting information acquiring means (11s); and
• a connection executing means (14) for connecting to a wireless communication network (30) associated with the connection setting information registered by the connection setting registering means (12s);
wherein
• the connection setting information includes at least an access point identification code for identifying access points (30, 30a, 30b) of the wireless communication network, and
• the connection executing means (13, 14) connects to the wireless communication network (30, 30a, 30b), based on the access point identification code.

4. The communication terminal (10s) according to claim 3, wherein the communication terminal (10s) further comprises:
• a search means (15) for searching, if the wireless communication network (301) associated with the connection setting information registered in the communication terminal (10s) cannot be connected, one or more wireless communication networks (30) existing around the communication terminal (10s); and
• a wireless communication network extracting means (16) for extracting, from the one or more wireless communication networks (30) searched by the search means (15), a wireless communication network (30) whose connection setting information is not yet registered in the communication terminal (10s), and
• the connection setting information acquiring means (11s) transmits an identification code for identifying access points of the extracted wireless communication network (30) to the management unit (60) together with the "un-connectable" message.

5. A communication program for directing a communication terminal (10, 10s) to function as:
• a connection setting information acquiring means (11, 11s) for acquiring upon request from the communication terminal (10, 10s), from a predefined network (40), connection setting information for connecting to a wireless communication network (30, 30a, 30b);
• a connection setting registering means (12, 12s) for registering the connection setting information acquired by the connection setting information acquiring means (11, 11s); and
• a connection executing means (13, 14) for connecting to the wireless communication network (30, 30a, 30b) associated with the connection setting information registered by the connection setting registering means (12, 12s);
wherein
• the connection setting information includes at least an access point identification code for identifying access points (30, 30a, 30b) of the wireless communication network, and
• the connection executing means (13, 14) connects to the wireless communication network (30, 30a, 30b), based on the access point identification code.

6. A communication program according to claim 5,
wherein the connection setting information acquiring means (11s) is further configured for transmitting, to a management unit (60), provided in the predefined network (40), managing connection setting information, an "un-connectable" message indicating that a wireless communication network (301) associated with the connection setting information for connecting to a wireless communication network registered in the communication terminal (11s) cannot be connected, and for acquiring, from the management unit (60), the connection setting information of a wireless communication network (30) currently available by the communication terminal (11s).

## Patentansprüche

1. Ein Kommunikationssystem (3) aufweisend ein Kommunikationsendgerät und eine Management-Einheit (60) zum Managen von Verbindungseinstellungsinformationen, um eine Verbindung mit einem Drahtlos-Kommunikationsnetzwerk (30) herzustellen,
wobei das Kommunikationsendgerät (10s) aufweist:
ein Verbindungseinstellungsinformationen-Erfassungsmittel zum Übertragen, an die Management-Einheit (60), von einer "Nicht-Verbindbar"-Nachricht, die anzeigt, dass ein Drahtlos-Kommunikationsnetzwerk (301), welches den Verbindungseinstellungsinformationen zugeordnet ist, die in dem Kommunikationsendgerät (11s) registriert sind, nicht verbunden werden kann, und zum Erfassen, von der Management-Einheit (60), der Verbindungseinstellungsinformationen eines Drahtlos-Kommunikationsnetzwerks (30), das für das Kommunikationsendgerät (10s) derzeit verfügbar ist;
ein Verbindungseinstellung-Registriermittel (12s) zum Registrieren der Verbindungseinstellungsinformationen, die von dem Verbindungseinstellungsinformationen-Erfassungsmittel (11s) erfasst wurden, und
ein Verbindung-Ausführmittel (13, 14) zum Verbinden mit einem Drahtlos-Kommunikationsnetzwerk (30), welches den Verbindungseinstellungsinformationen zugeordnet ist, die durch das Verbindungseinstellung-Registriermittel (12s) registriert wurden, und
wobei die Management-Einheit (60) aufweist:
ein Standortinformationen-Erfassungsmittel (61) zum Erfassen von Standortinformationen des Kommunikations-Endgeräts (10s) von einem Kommunikationsnetzwerk (40), welches die Standortinformationen des Kommunikationsendgeräts (10s) managt, basierend auf einer Telefonnummer, die von dem Kommunikationsendgerät (11s) angerufen wird, welches die "Nicht-Verbindbar"-Nachricht gesendet hat, wenn die "Nicht-Verbindbar"-Nachricht von dem Kommunikationsendgerät (11s) empfangen wird,
ein Verbindungseinstellungsinformationen-Extraktionsmittel (63) zum Extrahieren, aus den zuvor gespeicherten Verbindungseinstellungsinformationen des Drahtlos-Kommunikationsnetzwerks (40), der Verbindungseinstellungsinformationen eines Drahtlos-Kommunikationsnetzwerks (30), das derzeit für das Kommunikationsendgerät (11s) verfügbar ist, basierend auf der angerufenen Telefonnummer und den erfassten Standortinformationen, und
ein Verbindungseinstellungsinformationen-Übertragungsmittel (64) zum Übertragen der extrahierten Verbindungseinstellungsinformationen zu dem Kommunikationsendgerät (11s).

2. Das Kommunikationssystem gemäß Anspruch 1, wobei
die Verbindungseinstellungsinformationen zumindest einen Zugangspunkt-Identifizierungscode aufweisen, um Zugangspunkte (30) des Drahtlos-Kommunikationsnetzwerks zu identifizieren, und
das Verbindung-Ausführmittel (13, 14) basierend auf dem Zugangspunkt-Identifizierungscode eine Verbindung mit dem Drahtlos-Kommunikationsnetzwerk (30) herstellt.

3. Ein Kommunikationsendgerät (10s), das mit einer Management-Einheit (60) verbunden werden kann, die Verbindungseinstellungsinformationen zum Verbinden mit einem Drahtlos-Kommunikationsnetzwerk (30, 301) managt,
wobei das Kommunikationsendgerät (10s) aufweist:
ein Verbindungseinstellungsinformationen-Erfassungsmittel (11s) zum Übertragen, an die Management-Einheit (60), von einer "Nicht-Verbindbar"-Nachricht, die anzeigt, dass ein Drahtlos-Kommunikationsnetzwerk (301), welches den Verbindungseinstellungsinformationen zugeordnet ist, die in dem Kommunikationsendgerät (10s) registriert sind, nicht verbunden werden kann, und zum Erfassen, von der Management-Einheit (60), der Verbindungseinstellungsinformationen eines Drahtlos-Kommunikationsnetzwerks (30), das für das Kommunikationsendgerät (10s) derzeit verfügbar ist;
ein Verbindungseinstellung-Registriermittel (12s) zum Registrieren der Verbindungseinstellungsinformationen, die von dem Verbindungseinstellungsinformationen-Erfassungsmittel (11s) erfasst wurden, und
ein Verbindung-Ausführmittel (14) zum Verbinden mit einem Drahtlos-Kommunikationsnetzwerk (30), welches den Verbindungseinstellungsinformationen zugeordnet ist, die durch das Verbindungseinstellung-Registriermittel (12s) registriert wurden,
wobei
die Verbindungseinstellungsinformationen zumindest einen Zugangspunkt-Identifizierungscode aufweisen, um Zugangspunkte (30, 30a, 30b) des Drahtlos-Kommunikationsnetzwerks zu identifizieren, und
das Verbindung-Ausführmittel (13, 14) basierend auf dem Zugangspunkt-Identifizierungscode eine Verbindung mit dem Drahtlos-Kommunikationsnetzwerk (30, 30a, 30b) herstellt.

4. Das Kommunikationsendgerät (10s) gemäß Anspruch 3,
wobei das Kommunikationsendgerät (10s) ferner aufweist:
ein Such-Mittel (15) zum Suchen von einem oder mehreren Drahtlos-Kommunikationsnetzwerken (30), die im Umfeld des Kommunikationsendgeräts (10s) existieren, wenn das Drahtlos-Kommunikationsnetzwerk (301), welches den Verbindungseinstellungsinformationen zugeordnet ist, die in dem Kommunikationsendgerät (10s) registriert sind, nicht verbunden werden kann, und
ein Drahtlos-Kommunikationsnetzwerk-Extraktionsmittel (16) zum Extrahieren, aus dem einen oder den mehreren Drahtlos-Kommunikationsnetzwerken (30), welche von dem Such-Mittel (15) gesucht wurden, eines Drahtlos-Kommunikationsnetzwerks (30), dessen Verbindungseinstellungsinformationen noch nicht in dem Kommunikationsendgerät (10s) registriert wurden, und
wobei das Verbindungseinstellungsinformationen-Erfassungsmittel (11s) einen Identifizierungscode zum Identifizieren von Zugangspunkten des extrahierten Drahtlos-Kommunikationsnetzwerks (30) gemeinsam mit der "Nicht-Verbindbar"-Nachricht an die Management-Einheit (60) überträgt.

5. Ein Kommunikationsprogramm, um ein Kommunikationsendgerät (10, 10s) anzuweisen, dass es funktioniert als:
ein Verbindungseinstellungsinformationen-Erfassungsmittel (11, 11s), um bei Anfrage durch das Kommunikationsendgerät (10, 10s) Verbindungseinstellungsinformationen von einem vorbestimmten Netzwerk (40) zu erfassen, um eine Verbindung mit einem Drahtlos-Kommunikationsnetzwerk (30, 30a, 30b) herzustellen,
ein Verbindungseinstellung-Registriermittel (12, 12s) zum Registrieren der Verbindungseinstellungsinformationen, die von dem Verbindungseinstellungsinformationen-Erfassungsmittel (11, 11s) erfasst wurden, und
ein Verbindung-Ausführmittel (13, 14) zum Verbinden mit einem Drahtlos-Kommunikationsnetzwerk (30, 30a, 30b), welches den Verbindungseinstellungsinformationen zugeordnet ist, die durch das Verbindungseinstellung-Registriermittel (12, 12s) registriert wurden,
wobei
die Verbindungseinstellungsinformationen zumindest einen Zugangspunkt-Identifizierungscode aufweisen, um Zugangspunkte (30, 30a, 30b) des Drahtlos-Kommunikationsnetzwerks zu identifizieren, und
das Verbindung-Ausführmittel (13, 14) basierend auf dem Zugangspunkt-Identifizierungscode eine Verbindung mit dem Drahtlos-Kommunikationsnetzwerk (30, 30a, 30b) herstellt.

6. Ein Kommunikationsprogramm gemäß Anspruch 5,
wobei das Verbindungseinstellungsinformationen-Erfassungsmittel (11s) ferner konfiguriert ist, um an eine in dem vorbestimmten Netzwerk (40) bereitgestellte Management-Einheit (60), die Verbindungseinstellungsinformationen managt, eine "Nicht-Verbindbar"-Nachricht zu übertragen, die anzeigt, dass ein Drahtlos-Kommunikationsnetzwerk (301), welches den Verbindungseinstellungsinformationen zugeordnet ist, die in dem Kommunikationsendgerät (11s) registriert sind, nicht verbunden werden kann, und zum Erfassen, von der Management-Einheit (60), der Verbindungseinstellungsinformationen eines Drahtlos-Kommunikationsnetzwerks (30), das für das Kommunikationsendgerät (11s) derzeit verfügbar ist.

## Revendications

1. Système de communication (3) qui comprend un terminal de communication et une unité de gestion (60) destinée à gérer des informations de paramétrage de connexion pour se connecter à un réseau de communication sans fil (30),
dans lequel le terminal de communication (10s) comprend :
un moyen d'acquisition d'informations de paramétrage de connexion destiné à transmettre, à l'unité de gestion (60), un message de « non connectabilité » qui indique qu'un réseau de communication sans fil (301) associé aux informations de paramétrage de connexion enregistrées dans le terminal de communication (11s) ne peut pas être connecté, et à acquérir, auprès de l'unité de gestion (60), les informations de paramétrage de connexion d'un réseau de communication sans fil (30) actuellement disponible pour le terminal de communication (10s) ;
• un moyen d'enregistrement de paramètres de connexion (12s) destiné à enregistrer les informations de paramétrage de connexion acquises par le moyen d'acquisition d'informations de paramétrage de connexion (11s) ; et
• un moyen d'exécution de connexion (13, 14) destiné à se connecter à un réseau de communication sans fil (30) associé aux informations de paramétrage de connexion enregistrées par le moyen d'enregistrement de paramètres de connexion (12s), et
l'unité de gestion (60) comprend :
• un moyen d'acquisition d'informations de localisation (61) destiné à acquérir les informations de localisation du terminal de communication (10s) auprès d'un réseau de communication (40) qui gère les informations de localisation du terminal de communication (10s), sur la base d'un numéro de téléphone appelé depuis le terminal de communication (11s) qui a envoyé le message de « non connectabilité », si ledit message de « non connectabilité » est reçu de la part du terminal de communication (11s);
• un moyen d'extraction d'informations de paramétrage de connexion (63) destiné à extraire, depuis les informations de paramétrage de connexion du réseau de communication sans fil (40) préalablement stockées, les informations de paramétrage de connexion d'un réseau de communication sans fil (30) actuellement disponible pour le terminal de communication (11 s), sur la base du numéro de téléphone appelé et des informations de localisation acquises ; et
• un moyen de transmission d'informations de paramétrage de connexion (64) destiné à transmettre les informations de paramétrage de connexion extraites au terminal de communication (11 s).

2. Système de communication selon la revendication 1, dans lequel
• les informations de paramétrage de connexion comprennent au moins un code d'identification de point d'accès destiné à identifier les points d'accès (30) du réseau de communication sans fil, et
• le moyen d'exécution de connexion (13, 14) se connecte au réseau de communication sans fil (30), sur la base du code d'identification de point d'accès.

3. Terminal de communication (10s) qui peut se connecter à une unité de gestion (60) qui gère des informations de paramétrage de connexion qui permettent de se connecter à un réseau de communication sans fil (30, 301),
le terminal de communication (10s) comprenant :
• un moyen d'obtention d'informations de paramétrage de connexion (11s) destiné à transmettre, à l'unité de gestion (60), un message de « non connectabilité » qui indique qu'un réseau de communication sans fil (301) associé aux informations de paramétrage de connexion enregistrées dans le terminal de communication (10s) ne peut pas être connecté, et à acquérir, auprès de l'unité de gestion (60), les informations de paramétrage de connexion d'un réseau de communication sans fil (30) actuellement disponible pour le terminal de communication (10s) ;
• un moyen d'enregistrement de paramètres de connexion (12s) destiné à enregistrer les informations de paramétrage de connexion acquises par le moyen d'acquisition d'informations de paramétrage de connexion (11s); et
• un moyen d'exécution de connexion (14) destiné à se connecter à un réseau de communication sans fil (30) associé aux informations de paramétrage de connexion enregistrées par le moyen d'enregistrement de paramètres de connexion (12s) ;
dans lequel
• les informations de paramétrage de connexion comprennent au moins un code d'identification de point d'accès destiné à identifier les points d'accès (30, 30a, 30b) du réseau de communication sans fil, et
• le moyen d'exécution de connexion (13, 14) se connecte au réseau de communication sans fil (30, 30a, 30b) sur la base du code d'identification du point d'accès.

4. Terminal de communication (10s) selon la revendication 3, dans lequel le terminal de communication (10s) comprend en outre :
• un moyen de recherche (15) destiné à rechercher, si le réseau de communication sans fil (301) associé aux informations de paramétrage de connexion enregistrées dans le terminal de communication (10s) ne peut être connecté, un ou plusieurs réseau(x) de communication sans fil (30) qui existe(nt) autour du terminal de communication (10s) ; et
• un moyen d'extraction de réseau de communication sans fil (16) destiné à extraire, à partir d'un ou plusieurs réseau(x) de communication sans fil (30) recherché(s) par le moyen de recherche (15), un réseau de communication sans fil (30) dont les informations de paramétrage de connexion ne sont pas encore enregistrées dans le terminal de communication (10s), et
• le moyen d'acquisition d'informations de paramétrage de connexion (11s) transmet un code d'identification destiné à identifier les points d'accès du réseau de communication sans fil extraits (30) à l'unité de gestion (60), conjointement avec le message de « non connectabilité ».

5. Programme de communication destiné à permettre à un terminal de communication (10, 10s) de fonctionner comme :
• un moyen d'acquisition d'informations de paramétrage de connexion (11 s, 11 s) destiné à obtenir sur demande, de la part du le terminal de communication (10, 10s), à partir d'un réseau prédéfini (40), des informations de paramétrage de connexion qui permettent de se connecter à un réseau de communication sans fil (30, 30a, 30b) ;
• un moyen d'enregistrement de paramètres de connexion (12, 12s) destiné à enregistrer les informations de paramétrage de connexion acquises par le moyen d'obtention d'informations de paramétrage de connexion (11, 11s) ; et
• un moyen d'exécution de connexion (13, 14) destiné à connecter le réseau de communication sans fil (30, 30a, 30b) associé aux informations de paramétrage de connexion enregistrées par le moyen d'enregistrement de paramètres de connexion (12, 12s) ;
dans lequel
• les informations de paramétrage de connexion comprennent au moins un code d'identification de point d'accès destiné à identifier les points d'accès (30, 30a, 30b) du réseau de communication sans fil, et
• un moyen d'exécution de connexion (13, 14) qui se connecte au réseau de communication sans fil (30, 30a, 30b) sur la base du code d'identification du point d'accès.

6. Programme de communication selon la revendication 5, dans lequel le moyen d'acquisition d'informations de paramétrage de connexion (11 s) est en outre configuré pour transmettre, à une unité de gestion (60), prévue sur le réseau prédéfini (40), des informations de paramétrage de connexion de gestion, un message de « non connectabilité » qui indique qu'un réseau de communication sans fil (301) associé aux informations de paramétrage de connexion afin de se connecter à un réseau de communication sans fil enregistré dans le terminal de communication (11 s) ne peut pas être connecté, et pour acquérir, auprès de l'unité de gestion (60), les informations de paramétrage de connexion d'un réseau de communication sans fil (30) actuellement disponible pour le terminal de communication (11 s).
